# EUROPEAN PATENT SPECIFICATION

(11) **EP 2 791 729 B1**
(45) Date of publication and mention of the grant of the patent: **15.07.2015**
(21) Application number: 12798288.2
(22) Date of filing: 07.12.2012
(51) Int. Cl.: G02C 5/22, G02C 5/14

(54) **HINGE DEVICE FOR THE CONNECTION OF SIDE-PIECES TO THE FRONT OF MOUNTS FOR SPECTACLES AND SPECTACLES INCLUDING THIS DEVICE**
SCHARNIERVORRICHTUNG ZUR VERBINDUNG VON SEITENSTÜCKEN AN DER VORDERSEITE VON HALTERUNGEN FÜR BRILLEN UND BRILLEN MIT DIESER VORRICHTUNG
DISPOSITIF À CHARNIÈRE POUR LE RACCORDEMENT DE PIÈCES LATÉRALES À L'AVANT DE MONTURES DE LUNETTES, ET LUNETTES COMPRENANT CE DISPOSITIF

(30) Priority: 16.12.2011 IT PD20110391
(43) Date of publication of application: 22.10.2014
(73) Proprietor: Safilo Societa' Azionaria Fabbrica Italiana Lavorazione Occhiali S.p.a., 32044 Pieve di Cadore (BL) (IT)
(72) Inventor: GUADAGNIN, Paolo, I-35129 Padova (IT); BENVEGNU', Ivo, I-35129 Padova (IT); ARTUSI, Ampelio, I-35129 Padova (IT)
(74) Representative: Fabris, Stefano
(86) International application number: PCT/EP2012/074752
(87) International publication number: WO 2013/087525

(56) References cited:
- EP-A1- 0 902 313
- WO-A1-01/23944
- WO-A1-2009/062381
- WO-A1-2009/147318
- FR-A- 954 467
- FR-A1- 2 599 155
- FR-A1- 2 923 621

## Description

### Technical field

The present invention concerns a hinge device for the connection of side-pieces to the front of mounts for spectacles according to the preamble of claim 1. The invention also comprises spectacles provided with the aforementioned device.

### Technological background

In the specific technical sector, it is known to perform the articulation of side-pieces of spectacles by means of respective slot-like formations which are firmly secured to the side-piece and the lug of the mount and inside which threaded pins or screws forming hinge axes for the articulated connection of the side-pieces are engaged.

This type of solution may, however, result in undesirable loosening of the threaded pin or screw, with the need to perform periodically re-tightening, involving difficulties of various kinds for the user, who generally does not possess suitable tools or screwdrivers, especially in the presence of hinge devices which are very small in size and volume.

Technical solutions for spectacles, which do not have threaded pins or screws, are also known, hinging being performed by means of one or more cylindrical-pin formations which are connected or formed at the end of the side-piece and are able to rotatably engage inside suitable seats defined in side end portions of the front of the mount. These hinge devices, although they do not have different or separate hinge pins or screws are however generally somewhat complex from a structural point of view and in particular do not allow rapid and easy assembly/disassembly of the hinge elements by the user.

### Description of the invention

A main object of the invention is to provide a hinge device for the articulated connection of side pieces to the front of mounts for spectacles which has a structure such that it may be easily and rapidly assembled/disassembled, also by the end user, not envisaging the user of particular and specific equipment for assembly/disassembly of the device.

Another object of the invention is to provide a hinge device which, in addition to ensuring easier and rapid assembly of the hinge elements, has elements with an extremely small volume and size so as to allow the formation, with this device, of mounts which are extremely light and also have a very small overall volume. Another object is to provide a hinge device which, in addition to being easy to assemble and having a small volume, ensures better control of the degree of friction effect occurring during the articulation movement of the side-piece. The objects indicated above, together with others which will emerge more clearly below, are achieved by a hinge device for the articulated connection of side-pieces to the front of mounts for spectacles, provided in accordance with the accompanying claims.

### Brief description of the drawings

Further characteristic features and advantages of the invention will emerge more clearly from the detailed description below of a number of preferred non-limiting examples of embodiment thereof, with reference to the accompanying drawings in which:
- Figures 1 to 3 show partial perspective views of a first example of a hinge device provided in accordance with the present invention;
- Figure 4 is a perspective view of the hinge elements of the device according to the preceding figures in a different relative pivoted condition of the hinge elements;
- Figure 5 is a partial side elevation view, on a larger scale and with parts removed, of the device according to the preceding figures;
- Figure 6 is a partially sectioned view, in the assembled condition, of the device according to the preceding figures;
- Figure 7 is a perspective view of a detail of the device according to the preceding figures;
- Figure 8 is a perspective view of a further detail of the device according to the preceding figures;
- Figure 9 is a top plan view of the detail according to Figure 8;
- Figure 10 is a partially sectioned perspective view of a detail of the device according to the preceding figures;
- Figure 11 is an exploded perspective view of the device according to the preceding figures;
- Figure 12 is a partial, perspective, exploded view of a second example of a hinge device provided in accordance with the present invention;
- Figures 13 and 14 are perspective views of the device according to the preceding figure;
- Figures 15 and 16 are schematic side elevation views of a third example of the hinge device provided in accordance with the present invention, in two different assembled conditions thereof;
- Figure 17 is a partial perspective view of spectacles including a fourth example of the hinge device provided in accordance with the present invention;
- Figure 18 is a partial perspective view of the device according to the preceding figure;
- Figure 19 is a perspective view, on a larger scale, of a detail of the device according to the preceding figure;
- Figures 20, 21 and 22 are perspective views of details of the device according to the preceding figure, in different assembled conditions thereof.

### Preferred embodiments of the invention

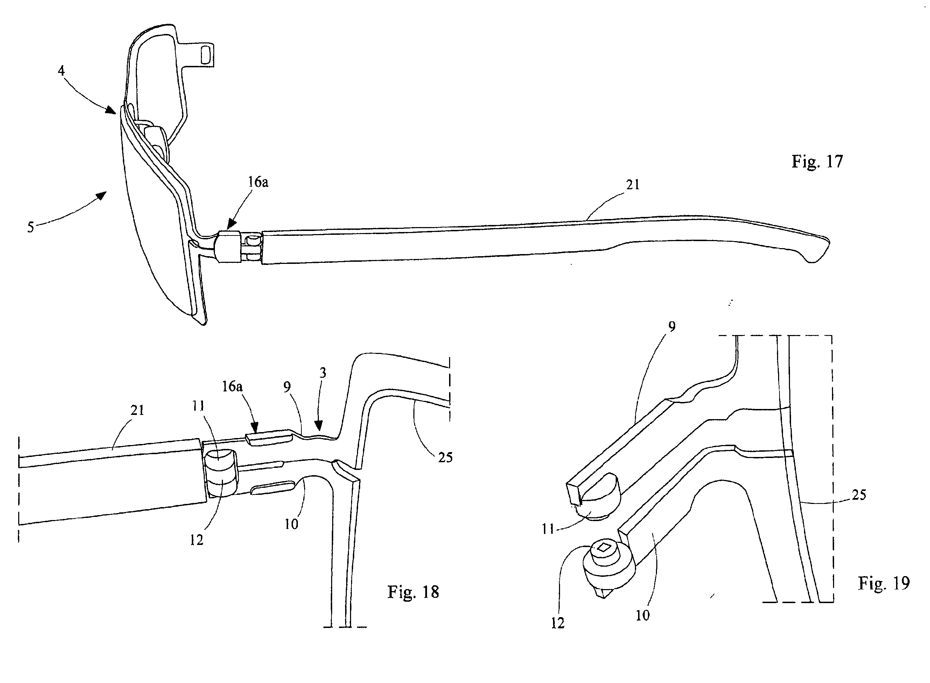

With reference to the said figures, 1 denotes in its entirety a first example of a hinge device for the articulation of a side-piece 2 with a lug 3 of a mount 4 for spectacles 5, only partially shown in Figures 17, provided in accordance with the present invention.

The hinge device 1 comprises a first and a second hinge element 6, 7 which are respectively connected to the side-piece 2 and to the lug 3 of the front mount 4. It is understood that the hinge elements 6, 7 may be firmly secured to or formed as one piece with the respective ends of the side-piece and the lug. The hinge elements 6, 7 are able to pivot relative to each other about a hinge axis X, which is substantially perpendicular to the direction of longitudinal extension of the side-piece.

The first hinge element 6 comprises a body configured substantially in the form of a fork with a pair of opposed arms 9, 10, the respective free ends 9a, 10a of which extend transversely with respect to the direction of extension of the arms so as to be mutually aligned along the hinge axis. 9b, 10b also denote respective appendages of the corresponding arms 9, 10 which extend parallel to and are spaced from the ends 9, 10 so as to be also substantially aligned along a direction parallel to the hinge axis and the function of which will become clear from the description below.

The ends 9a,10a of the arms 9,10 are provided with pin-type means for achieving the hinged articulation between the first element and second element 6, 7, said means comprising a respective pair of discoid bodies 11, 12 which are structurally identical to each other and only one of which will therefore be described in detail below.

Each discoid body 11, 12 is structurally independent of the corresponding arm 9, 10, but firmly securable thereto, said bodies being mounted in a position facing each other and also coaxial with the hinge axis, so as to form pin-type formations for articulation with the second hinge element 7.

Each discoid body 11, 12 has, defined therein, a respective head 11a,12a axially extended so as to form a respective outside portion with a cylindrical surface 11b, 12b. The body 11, 12 is also passed through axially by a respective opening 11c, 12c inside which the corresponding end 9a, 10a of the corresponding arm 9, 10 may be received. Each discoid body 11, 12 is constrained, in a removable manner, to the corresponding arm by anti-rotation means which prevent relative rotation thereof about the hinge axis, with relative sliding freedom in the direction of said axis. The anti-rotation means comprise a form-fit coupling between a seat in the form of a channel 11d, 12d extending diametrally in the head and a portion 9c, 10c of the corresponding arm 9, 10, associated therewith and defined at the end 9a, 10a thereof. Conveniently the fork-like body 8 has a plate-like configuration with a thickness such that the portions 9c, 10c are received with a substantial form-fit inside the respective channels 11d, 12d, so that the discoid bodies may be firmly secured removably to the corresponding arms.

The second hinge element 7 comprises, at one end of the lug 3, a through-seat in the form of a cylindrical slot 15 capable of receiving in rotatable engagement the cylindrical surfaces 11b, 12b of the discoid bodies 11, 12 when mounted on the respective arms of the fork-like body, so as to provide the hinged coupling about the hinge axis X.

Preferably the slot-like seat 15 is formed as a circular through-hole with a closed contour. In this case, for assembly of the hinge device, the arms 9, 10 of the fork-like body are splayed beforehand, so as to allow insertion of the discoid bodies 11, 12, and then moved back towards each other after positioning of the slot-like seat 15 with rotatable engagement therebetween and the discoid bodies.

The extension and the form of the arms 9, 10 are chosen so that the arms are elastically deformable, for example able to be splayed in the direction parallel to the hinge axis X, consequently allowing them to perform a limited relative movement away from each other, so as to allow assembly of the discoid bodies 9, 10 along the hinge axis, with the positioning of the slot-like seat 15 in between, so as to form the hinged articulation between the elements 6, 7.

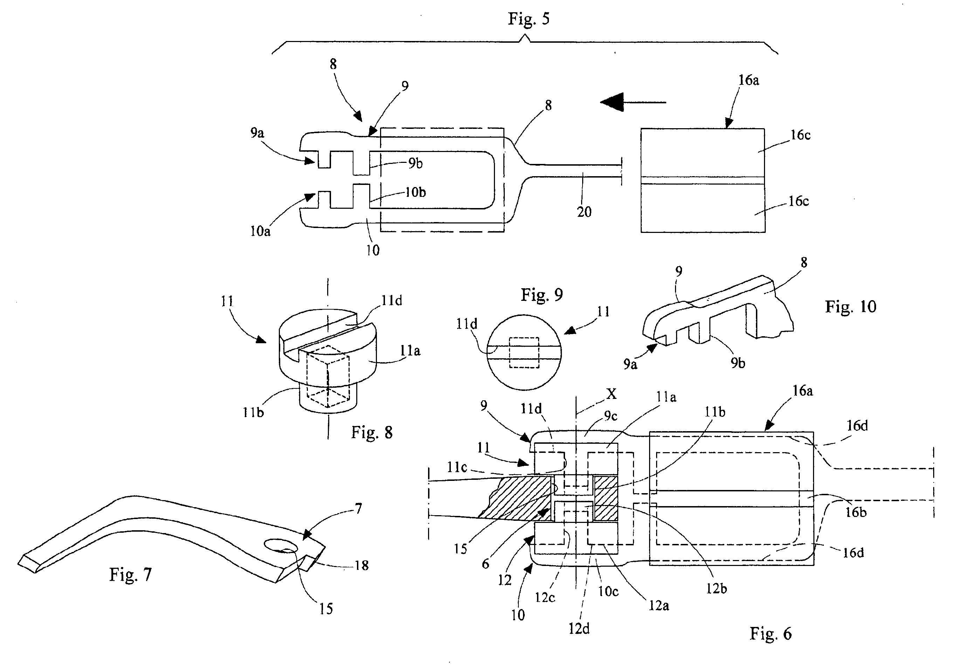

In order to retain the arms of the fork-like body 8 in an adjacent position (close to each other) and oppose disengagement of the discoid bodies from the slot-like seat of the hinge, it is envisaged mounting a locking element acting removably between the arms 9, 10. Preferably, said locking element comprises a body in the form of a clip 16a which can be removably attached between the arms 9, 10. The body of the clip 16a has a plate-like part 16b with a pair of opposed end edges 16c which are bent over so as to define respective grooves 16d capable of being engaged by corresponding opposed portions of said arms, the clip being also capable of attachment by means of sliding with respect to the arms, transversely to the hinge axis, with sliding engagement of said portions of the arms in the corresponding grooves of the clip, as clearly shown in Figures 5 and 6.

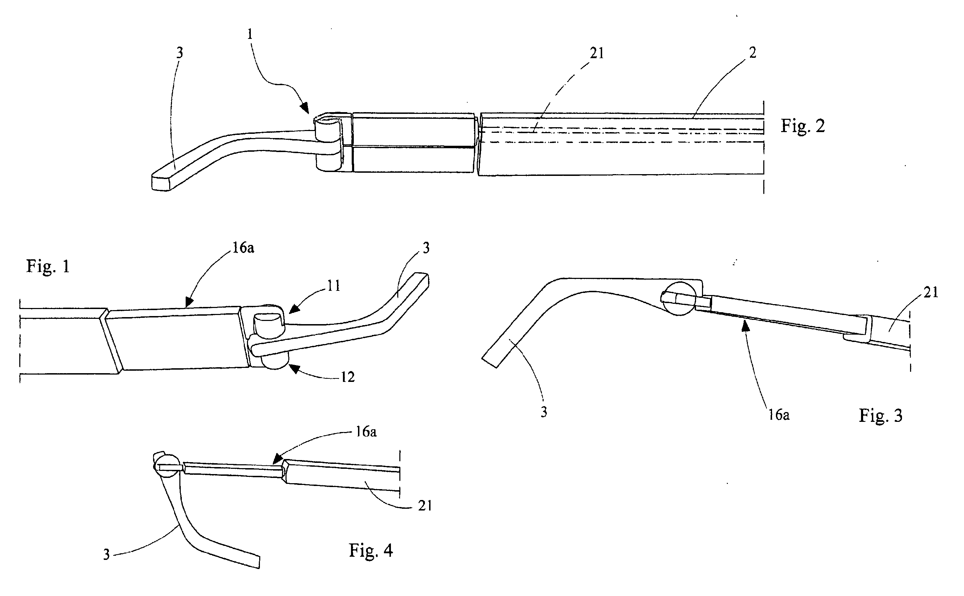

18 denotes a tooth-like projection formed on the lug 3 in the vicinity of the slot 15 and intended to bear against the appendages 9b, 10b of the fork-like body, during rotation of the side-piece with respect to the lug, so as to limit the angle of opening of the side-piece. The maximum open and closed positions of the side-piece with respect to the mount are respectively shown in Figures 3 and 4. Conveniently the discoid bodies 11, 12 are made of metallic material. Owing to the rotational engagement of these discoid bodies inside the slot-like seat, which is also made of metallic material, a relative sliding movement with friction is obtained between the coupled surfaces, so as to ensure a suitable degree of "friction effect" during the movement, for better control of the degree of opening of the side-piece when pivoting about the hinge axis.

Alternatively, the discoid bodies may be made of a suitable plastic material which is characterized by a high resistance to frictional wear, it also being possible to use a metallic material for the construction of the slot-like seat.

In this first example of embodiment, it is envisaged that the fork-like body 8, made of metallic material, extends, on the side axially opposite to that of the arms, in the form of a bar-like element 20 which is prolonged as far as the end region of the side-piece and designed to be covered by an end-piece 21 for the side-piece, which is made of plastic and able to be force-fitted onto the element 20 up against the fork-like body.

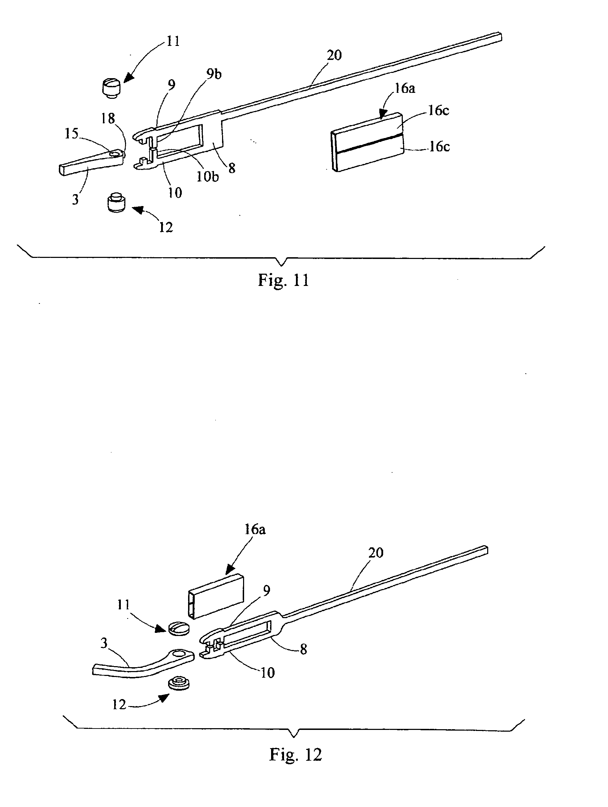

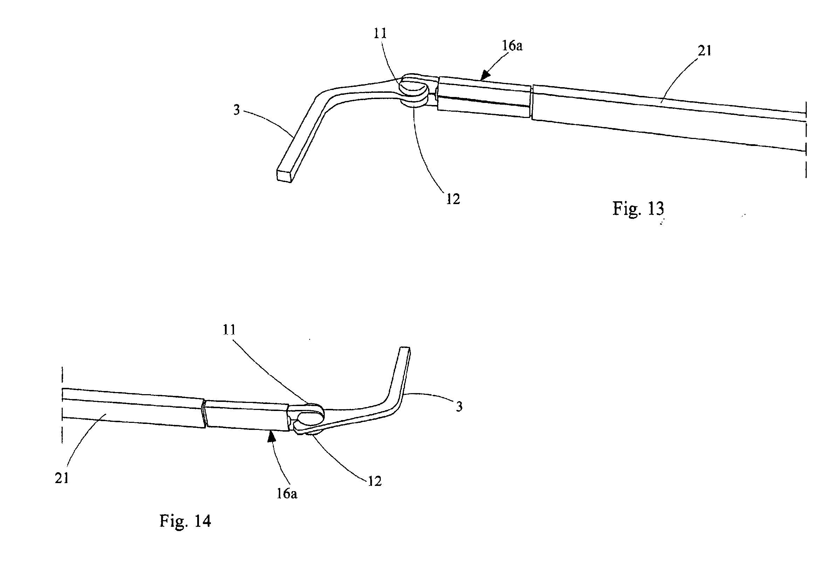

Figures 12-14 show a second example of embodiment of the device according to the invention, in which details similar to those of the preceding example are indicated by the same reference numbers.

This second example differs from the preceding example mainly owing to the different form of the discoid bodies, substantially in terms of dimensional volume, but ensuring at the same functions described above.

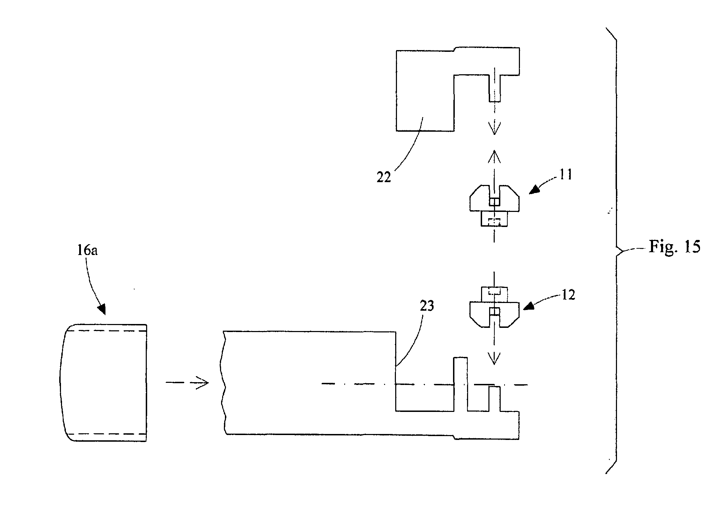

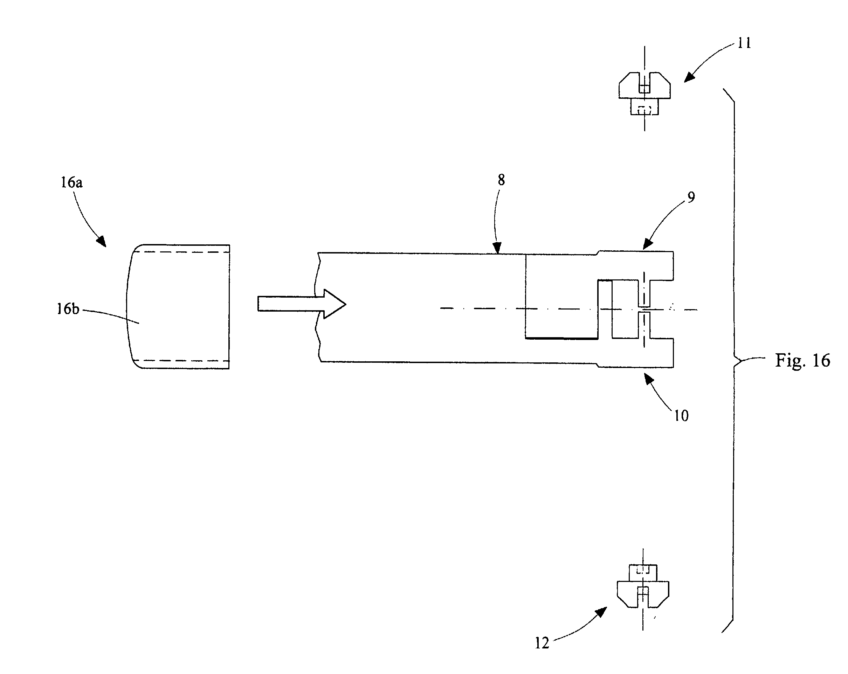

Figures 15 and 16 show schematically a third example of embodiment of the hinge device according to the invention, in which details similar to those of the preceding examples are indicated by the same reference numbers.

This third example differs from the preceding embodiments mainly in that one of the arms of the fork-like body, that indicated by 9 in the figures, is formed so as to be structurally independent of the fork-like body 8 and can be firmly secured, in a removable manner, to the said fork-like body.

In greater detail, the arm 9 is provided with an appendage 22 which is designed to engage, by means of a substantial form-fit with a seat 23 formed in the fork-like body 8, so as to ensure the relative positioning of the arms 9, 10, securing of the arm 9 to the body 8 being ensured by the attachment, between said arms 9, 10, of the clip 16a, said attachment being able to be obtained by means of sliding of the clip on the fork-like body in the direction transverse to the hinge axis.

By forming one of the arms in a manner separate and different from the other arm, with subsequently relative locking, mounting of the discoid bodies 11, 12 may be facilitated with the positioning in between of the slot-like seat 15, without the need for any prior deformation of the fork-like body in order to splay the arms, as envisaged in the preceding examples.

Figures 17 to 22 show schematically a fourth example of embodiment of the hinge device according to the invention, in which details similar to those of the preceding examples are indicated by the same reference numbers.

This example differs from the preceding examples mainly in that it envisages a fork-like body 8 incorporated in the lug of the mount, with the slot-like seat provided at the end of the side-piece.

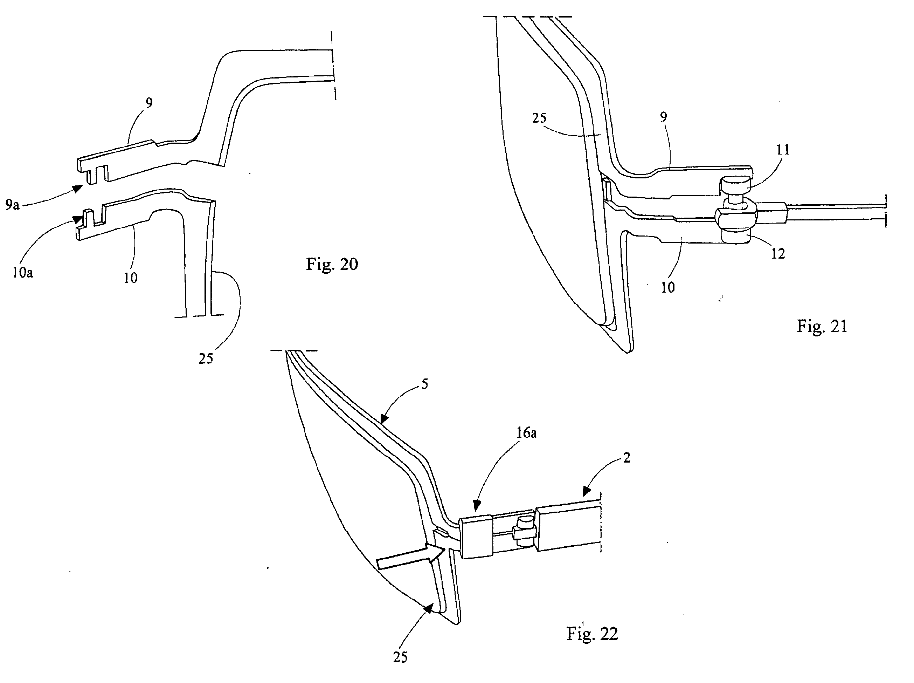

More particularly, the front mount comprises respective lens-holding rims 25, the contour of which is open in the region of the side lug 3. In this zone the different and separate ends of the corresponding rim are extended into the respective arms 9, 10 of the hinge device, as clearly shown in Figures 19 and 20. The relative locking of the arms 9, 10 is ensured by mounting of the clip element 16a which is inserted at the front of the mount and is slid as far as the prechosen position for ensuring locking of the arms 9, 10. It should be noted how this locking action ensures not only assembly of the hinge device, but also retention of the lens in the respective lens-holding rim.

The invention thus achieves the objects proposed, obtaining the advantages mentioned compared to the known solutions.

A main advantage consists in the fact that, by means of the device according to the invention, it is possible to achieve a hinge structure such that it may be easily and rapidly assembled/disassembled, also by the end user, not envisaging the use of particular and specific equipment for mounting/removing the device. Another advantage is linked to the fact that, with the hinge device according to the invention, it is possible to provide hinge elements with volumes and dimensions which are particularly small, in particular so as to provide mounts which are extremely light as well as with an extremely small overall volume.

Another advantage consists in the fact of being able to obtain, with the hinge device according to the invention, an improved control of the degree of friction effect during the hinging movement of the side-piece, compared to the known solutions.

## Claims

1. A hinge device for the connection of side-pieces (2) to the front of mounts (4) for spectacles, comprising a first and a second hinge element (6,7) which are articulated about a hinge axis (X), the first element (6) comprising a body (8) configured substantially in the form of a fork with a pair of opposed arms (9, 10) the ends (9a, 10a) of which extend transversly with respect to the direction of the extension of the arms such as to be mutually aligned along the hinge axis (X) and comprise pin type means capable of rotatable engagement in a seat provided in the second hinge element (7) to provide the hinged coupling, about said axis (X), of the first (6) and the second (7) element, **characterized in that** the pin type means comprise, on each of the ends (9a, 10a) of the X arms (9, 10), a respective discoid body (11, 12) on the outside of which a cylindrical surface (11b, 12b) is defined, each of the bodies (11, 12) being structurally independent of the corresponding arm (9, 10) and firmly securable thereto, the discoid bodies (11, 12) being mounted in a position facing each other and also coaxial with the hinge axis (X), and **in that** the seat is in the form of a cylindrical slot (15) capable of receiving in rotatable engagement the cylindrical surfaces (11b, 12b) of the discoid bodies (11, 12) in order to provide the hinged coupling about said axis (X).

2. A device according to claim 1, comprising a locking element acting removably between the arms (9, 10) to retain same in the close position and opposing the disengagement of the discoid bodies (11, 12) from the hinge seat.

3. A device according to claim 2, wherein the locking element comprises a body in the form of a clip (16a) which can be removably attached between the arms (9, 10).

4. A device according to claim 3, wherein the body of the clip (16a) has a plate-like part (16b) with a pair of opposed end profiles (16c) which are bent over to define respective grooves (16d) capable of being engaged by corresponding opposed portions of the arms, the clip (16a) being capable of attachment by means of sliding with respect to the arms (9,10), transversely to the hinge axis (X), with sliding engagement of the portions of the arms in the corresponding grooves (16d) of the clip.

5. A device according to any one of claims 2 to 4, wherein at least one of the arms (9, 10) is structurally independent of the body (8) in the form of a fork and comprises an appendage (22) capable of engagement, by at least partial form-fit coupling, in a seat (23) provided in the fork-like body (8), for relative positioning between the arms (9, 10), with corresponding mutual locking of the arms by means of the attachment between same of the clip element (16a).

6. A device according to any one of the preceding claims, wherein each discoid body (11, 12) and the corresponding end of the arm on which the body is mounted are provided with anti-rotation means relative to the hinge axis (X).

7. A device according to claim 6, wherein the anti-rotation means comprise a form-fit coupling between a seat provided in the respective discoid body (11, 12) and a portion of the corresponding arm (9, 10) associated therewith, the form-fit coupling preventing relative rotation about the hinge axis (X) with relative sliding freedom in the direction of said axis.

8. A device according to any one of the preceding claims, wherein the discoid bodies (11, 12) are made of metallic material.

9. Spectacles comprising a hinge device (1) according to any one of the preceding claim, for the articulated connection of the side-pieces (2) to a front mount (4) of the spectacles.

10. Spectacles according to claim 9, wherein there is incorporated in each side-piece (2) the respective fork-like body (8) and the slot-like hinge seat (15) is provided at the end of each respective lateral lug (3) of the mount.

11. Spectacles according to claim 9, wherein the arms (9, 10) of each of the fork-like bodies (8) extend in lateral extension of a respective lens-holding rim (25) of the mount, and the slot-like hinge seat (15) is provided at one end of the corresponding side-piece (2).

12. Spectacles according to claim 11, wherein the lens-holding rims (25) are open in the region of the arms (9, 10), each of which extends in extension of each corresponding free end of the rim (25), the lens-holding rim being lockable by means of attachment of the clip element (16a) between the arms (9, 10).

## Patentansprüche

1. Scharniervorrichtung zur Verbindung von Seitenteilen (2) mit der Vorderseite von Halterungen (4) für Brillen, die ein erstes und ein zweites Scharnierelement (6, 7) umfasst, die um eine Scharniersachse (X) angelenkt sind, wobei das erste Element (6) einen Körper (8) aufweist, der im Wesentlichen in Form einer Gabel mit einem Paar von gegenüberliegenden Armen (9, 10) konfiguriert ist, von denen sich die Enden (9a, 10a) in Bezug auf die Richtung der Erstreckung der Arme quer erstrecken, um gegenseitig längs der Scharniersachse (X) ausgerichtet zu sein, und eine Stift-Einrichtung aufweisen, die einen drehbaren Eingriff in einem Sitz ermöglicht, der im zweiten Scharnierelement (7) vorgesehen ist, um die Scharnierverbindung um die Achse (X) des ersten (6) und des zweiten (7) Elements bereitzustellen, **dadurch gekennzeichnet, dass** die Stift-Einrichtung, auf jedem der Enden (9a, 10a) der Arme (9, 10) einen jeweiligen scheibenförmigen Körper (11, 12) aufweist, auf dessen Außenseite eine zylindrische Fläche (11 b, 12b) definiert ist, wobei jeder der Körper (11, 12) strukturell unabhängig vom entsprechenden Arm (9, 10) und daran fest befestigbar ist, wobei die scheibenförmigen Körper (11, 12) in einer einander zugewandten Position und auch koaxial zur Scharniersachse (X) montiert sind, und dass der Sitz die Form eines zylindrischen Schlitzes (15) aufweist, der in der Lage ist, die zylindrischen Flächen (11b, 12b) der scheibenförmigen Körper (11, 12) in einem drehbaren Eingriff aufzunehmen, um die Scharnierverbindung um die Achse (X) bereitzustellen.

2. Vorrichtung nach Anspruch 1, die ein Verriegelungselement aufweist, das zwischen den Armen (9, 10) abnehmbar wirkt, um diese in der geschlossenen Position und dem Ausrücken der scheibenförmigen Körper (11, 12) aus dem Scharniersitz entgegenwirkend zu halten.

3. Vorrichtung nach Anspruch 2, wobei das Verriegelungselement einen Körper in Form eines Clips (16a) aufweist, der zwischen den Armen (9, 10) abnehmbar befestigt werden kann.

4. Vorrichtung nach Anspruch 3, wobei der Körper des Clips (16a) einen plattenartigen Teil (16b) mit einem Paar von gegenüberliegenden Endprofilen (16c) aufweist, die umgebogen sind, um jeweilige Nuten (16d) zu bilden, die von den jeweiligen gegenüberliegenden Bereiche der Arme in Eingriff gebracht werden können, wobei der Clip (16a) mittels einer Verschiebung in Bezug auf die Arme (9, 10) quer zur Scharnierachse (X) mit einem Verschiebeeingriff der Bereiche der Arme in die jeweiligen Nuten (16d) des Clips befestigbar ist.

5. Vorrichtung nach einem der Ansprüche 2 bis 4, wobei zumindest einer der Arme (9, 10) vom Körper (8) in der Form einer Gabel strukturell unabhängig ist und einen Ansatz (22) aufweist, der einen Eingriff durch eine zumindest teilweise formschlüssige Verbindung in einem Sitz (23) ermöglicht, der im gabelförmigen Körper (8) für eine relative Positionierung zwischen den Armen (9, 10) mit einer entsprechenden gegenseitigen Verriegelung der Arme mittels der Befestigung zwischen denen des Clipelements (16a) vorgesehen ist.

6. Vorrichtung nach einem der vorhergehenden Ansprüche, wobei jeder scheibenförmige Körper (11, 12) und das entsprechende Ende des Arms, an dem der Körper montiert ist, mit einer Verdrehsicherung relativ zur Scharnierachse (X) versehen sind.

7. Vorrichtung nach Anspruch 6, wobei die Verdrehsicherung eine formschlüssige Verbindung zwischen einem Sitz, der im jeweiligen scheibenförmigen Körper (11, 12) vorgesehen ist, und einem Bereich des entsprechenden, damit zugeordneten Arms (9, 10) aufweist, wobei die formschlüssige Verbindung eine relative Drehung um die Scharnierachse (X) mit einer relativen Verschiebefreiheit in der Richtung der Achse verhindert.

8. Vorrichtung nach einem der vorhergehenden Ansprüche, wobei die scheibenförmigen Körper (11, 12) aus einem metallischen Material hergestellt sind.

9. Brille mit einer Scharniervorrichtung (1) gemäß einem der vorhergehenden Ansprüche, für die Scharnierverbindung der Seitenstücke (2) mit einer vorderen Halterung (4) der Brille.

10. Brille nach Anspruch 9, wobei in jedem Seitenstück (2) der jeweilige gabelförmige Körper (8) integriert ist und der schlitzartige Scharniersitz (15) am Ende einer jeden jeweiligen Seitenlasche (3) der Halterung vorgesehen ist.

11. Brille nach Anspruch 9, wobei sich die Arme (9, 10) von jedem der gabelförmigen Körper (8) in seitlicher Verlängerung eines jeweiligen Brillenglas-Halterands (25) der Halterung erstrecken, und der schlitzartige Scharniersitz (15) an einem Ende des entsprechenden Seitenstücks (2) vorgesehen ist.

12. Brille nach Anspruch 11, wobei die Brillenglas-Halteränder (25) in der Region der Arme (9, 10) offen sind, von denen sich jeder in Verlängerung eines entsprechenden freien Endes des Rands (25) erstreckt, wobei der Brillenglas-Halterand mittels einer Befestigung des Clipelements (16a) zwischen den Armen (9, 10) verriegelbar ist.

## Revendications

1. Dispositif à charnière pour le raccordement des branches (2) à l'avant de la monture (4) de lunettes, comprenant un premier et un second élément de charnière (6, 7) qui sont articulés autour d'un axe de charnière (X), le premier élément (6) comprenant un corps (8) configuré sensiblement en forme de fourche avec une paire de bras opposés (9, 10), dont les extrémités (9a, 10a) s'étendent transversalement par rapport à la direction de l'extension des bras afin d'être mutuellement alignées le long de l'axe de charnière (X) et comprennent des moyens de type broche capables de se mettre en prise, en rotation, dans un siège prévu dans le second élément de charnière (7) pour fournir le couplage articulé, autour dudit axe (X), du premier (6) et du second (7) élément, **caractérisé en ce que** les moyens de type broche comprennent, sur chacune des extrémités (9a, 10a) des bras (9, 10), un corps discoïdal (11, 12) respectif sur l'extérieur duquel est définie une surface cylindrique (11b, 12b), chacun des corps (11, 12) étant structurellement indépendant du bras (9, 10) correspondant et pouvant y être fermement fixé, les corps discoïdaux (11, 12) étant montés dans une position l'un en face de l'autre et également coaxiale par rapport à l'axe de charnière (X) et **en ce que** le siège se présente sous la forme d'une fente cylindrique (15) pouvant recevoir, en mise en prise rotative, les surfaces cylindriques (11b, 12b) des corps discoïdaux (11, 12) afin de prévoir le couplage articulé autour dudit axe (X).

2. Dispositif selon la revendication 1, comprenant un élément de verrouillage agissant de manière amovible entre les bras (9, 10) pour retenir ces derniers dans la position proche et opposée au dégagement des corps discoïdaux (11, 12) du siège de charnière.

3. Dispositif selon la revendication 2, dans lequel l'élément de verrouillage comprend un corps en forme d'attache (16a) qui peut être fixé de manière amovible entre les bras (9, 10).

4. Dispositif selon la revendication 3, dans lequel le corps de l'attache (16a) a une partie en forme de plaque (16b) avec une paire de profils d'extrémité (16c) opposés qui sont pliés pour définir des rainures (16d) respectives pouvant être mises en prise en faisant correspondre des parties opposées des bras, l'attache (16a) étant capable de se fixer au moyen du coulissement par rapport aux bras (9, 10), transversalement par rapport à l'axe de charnière (X), avec la mise en prise coulissante des parties des bras dans les rainures (16d) correspondantes de l'attache.

5. Dispositif selon l'une quelconque des revendications 2 à 4, dans lequel au moins l'un des bras (9, 10) est structurellement indépendant du corps (8) sous la forme d'une fourche et comprend un appendice (22) pouvant se mettre en prise, par au moins un couplage de forme partiel, dans un siège (23) prévu dans un corps en forme de fourche (8), pour le positionnement relatif entre les bras (9, 10), avec le verrouillage mutuel correspondant des bras au moyen de la fixation entre eux de l'élément d'attache (16a).

6. Dispositif selon l'une quelconque des revendications précédentes, dans lequel chaque corps discoïdal (11, 12) et l'extrémité correspondante du bras sur laquelle le corps est monté, sont prévus avec des moyens anti-rotation par rapport à l'axe de charnière (X).

7. Dispositif selon la revendication 6, dans lequel les moyens anti-rotation comprennent un couplage de forme entre un siège prévu dans le corps discoïdal (11, 12) respectif et une partie du bras (9, 10) correspondant associé à ce dernier, le couplage de forme empêchant la rotation relative autour de l'axe de charnière (X) avec la liberté de coulissement relative dans la direction dudit axe.

8. Dispositif selon l'une quelconque des revendications précédentes, dans lequel les corps discoïdaux (11, 12) sont réalisés à partir de matériau métallique.

9. Lunettes comprenant un dispositif à charnière (1) selon l'une quelconque des revendications précédentes, pour le raccordement articulé des branches (2) à une partie avant de la monture (4) des lunettes.

10. Lunettes selon la revendication 9, dans lesquelles on incorpore dans chaque branche (2), le corps en forme de fourche (8) respectif et le siège de charnière en forme de fente (15) est prévu à l'extrémité de chaque patte latérale (3) respective de la monture.

11. Lunettes selon la revendication 9, dans lesquelles les bras (9, 10) de chacun des corps en forme de fourche (8) s'étendent dans l'extension latérale d'un bord de support de verre (25) respectif de la monture, et le siège de charnière en forme de fente (15) est prévu au niveau d'une extrémité de la branche (2) correspondante.

12. Lunettes selon la revendication 11, dans lesquelles les bords de support de verre (25) sont ouverts dans la région des bras (9, 10), dont chacun s'étend en extension de chaque extrémité libre correspondante du bord (25), le bord de support de verre pouvant être verrouillable au moyen de la fixation de l'élément d'attache (16a) entre les bras (9, 10).
